# EUROPEAN PATENT APPLICATION

(11) **EP 4 597 392 A1**
(43) Date of publication of application: **06.08.2025**
(21) Application number: 24155849.3
(22) Date of filing: 05.02.2024
(51) Int. Cl.: G06Q 20/04, G06Q 20/12, G06Q 20/32, G06Q 20/36

(54) **MOBILE COMMERCE SOLUTIONS**

(71) Applicant: Mastercard International Incorporated, Purchase, NY 10577 (US)
(72) Inventor: GUILLEMAIN, Pierre-Nicolas, 60316 Frankfurt (DE); TRZESCHAN, Nikolaus, 48163 Münster (DE)
(74) Representative: Keltie LLP

(57) **Abstract**

A method for staging a wireless transaction from a digital pass is described. The method comprises, at a merchant server, identifying a potential transaction, and determining transaction information for the payment transaction. The method further comprises, obtaining a payment link, wherein the payment link provides access to the transaction information to allow the potential transaction to be initiated at a user device. The payment link is then provided for incorporation into a digital pass for provision to a digital wallet of the user device.

## Description

### FIELD OF DISCLOSURE

The present disclosure relates generally to mobile commerce solutions.

### BACKGROUND

Mobile commerce now makes a major contribution to business to consumer sales, and much of the interaction between merchants and consumers is mediated through consumer mobile telephones. This applies not only to the use of a mobile telephone as a payment device and interaction between consumers and merchants through merchant website, but also through delivery of digital products and services to a customer telephone, and use of apps and other software on a consumer telephone to enhance the relationship between merchants and customers.

It would be desirable to use the capabilities of a consumer mobile telephone to offer new possibilities and capabilities for mobile commerce.

### SUMMARY OF DISCLOSURE

The present inventors have appreciated that digital passes can be used to expand the capabilities of mobile commerce. Mobile telephones will now typically have a wallet app, normally closely associated (as for Apple Wallet for Apple iOS and Google Wallet for Android) with the phone operating system. These provide an interface to a digital wallet through which customer credit and debit cards (in digitized versions) can be used to make payments. The wallet app will also act as a repository for credentials provided in digital form, such as event and transit tickets and boarding passes. These are provided in the form of digital passes (also termed digital wallet passes), which have a well-defined structure determined by the related app and operating system. Such digital passes typically support dynamic content provision - allowing, for example, boarding passes to be updated to show a boarding gate, or a rescheduled flight time. The present inventors have appreciated that in situations where digital passes are already used, there may be opportunities to use the digital pass to offer additional services that are priced and require a payment transaction. For example, in the case of a boarding pass, this may include paid access to the airport lounge or the purchase of an upgrade. In the case of a digital customer card of an energy supplier, the payment of the monthly budget billing or annual additional payment.

The present inventors have appreciated that such additional services could be accessed most effectively by integrating payment methods within the digital passes, to allow for a more seamless experience to the user.

The present disclosure provides a description of systems and methods for incorporating payment links within digital passes to enable in-mobile-wallet payment processing from a digital pass.

In a first aspect, the disclosure provides a method for staging a wireless transaction from a digital pass, the method comprising at a merchant server: identifying a potential transaction, and determining transaction information for the payment transaction; obtaining a payment link, wherein the payment link provides access to the transaction information to allow the potential transaction to be initiated at a user device; providing the payment link for incorporation into a digital pass for provision to a digital wallet of the user device.

In embodiments, access to the digital pass is obtained from either the merchant server or a digital pass creation server.

In embodiments, the digital pass is created at the merchant server.

In embodiments, the digital pass is created without a payment link, and wherein the merchant server instructs the update of the digital pass to incorporate the payment link into the digital pass.

In embodiments, the digital pass is associated with an app installed at the user device, and wherein the payment link is associated with an in-app transaction.

In embodiments, the payment link is for payment using a mobile wallet application. In alternative embodiments the payment link is for payment using an open banking platform. In yet additional alternative embodiments, the payment link is for payment using an online payment platform.

In a second aspect, the disclosure provides a method for carrying out a wireless transaction from a digital pass, the method comprising at a user device: receiving a digital pass in a digital wallet of the user device, wherein the digital pass comprises a payment link for a potential transaction associated with the digital pass, and wherein the potential transaction has predetermined transaction details; receiving a user activation of the payment link, and initiating the potential transaction according to the predetermined transaction details.

In embodiments, the user device receives an authorisation request before the transaction is completed.

In embodiments, initiating the potential transaction comprises the user interacting with the payment link.

In embodiments, a merchant validation request is sent to a merchant server after the user interacted with the payment link and before initiating the transaction.

In embodiments, the payment link is for payment using a mobile wallet application. In alternative embodiments, the payment link is for payment using an open banking platform. In yet additional alternative embodiments, the payment link is for payment using an online payment platform.

In summary, the disclosure herein relates to methods and computing systems for enabling secure and fast payment processing, directly within a digital pass stored on a mobile wallet, via an existing mobile payment account or an open banking link. In this way, a fully integrated payment feature is provided, which combines the ability to place links within digital passes, issue personalised passes and update them dynamically, and use mobile payment methods for in-app purchases.

### BRIEF DESCRIPTION OF THE DRAWINGS

Figure 1 shows an example of a transaction system adapted for performing embodiments of the disclosure.
Figure 2A shows schematically a general example of the face side of a digital wallet pass.
Figure 2B shows schematically a general example of the rear side of a digital wallet pass.
Figure 2C shows schematically a general example of the rear side of a digital wallet pass where a payment link has been implemented.
Figure 3 shows a schematic flow diagram of the method implemented using a payment link to a server of a mobile payment application, according to embodiments of the present disclosure.
Figure 4 shows a schematic flow diagram of the method for carrying out a wireless transaction from a digital wallet pass using an Open Banking payment link, according to embodiments of the present disclosure.
Figure 5A shows an example of the back side of a digital wallet pass that includes a payment link, according to embodiments of the disclosure.
Figure 5B provides an illustrative example of the user interface as see by the user once the user interacted with the payment link and the user is redirected to a webpage or to a mobile app to authenticate the payment, using an Open Banking payment link, according to embodiments of the present disclosure.
Figure 5C provides an illustrative example of the user interface as see by the user once the payment is completed, using an Open Banking payment link, according to embodiments of the present disclosure.
Figure 6A provides an illustrative example of the face side of a digital wallet, according to embodiments of the present disclosure.
Figure 6B shows an example of the back side of a digital wallet pass that includes a payment link, according to embodiments of the disclosure.
Figure 7 shows a schematic flow diagram of the method implemented using a payment link to an online payment platform, according to embodiments of the present disclosure.
Figure 8 provides an illustrative example of the user interface as seen by the user when prompt to confirm payment when using a mobile payment application, according to embodiments of the present disclosure.

### DETAILED DESCRIPTION

General and specific embodiments of the disclosure will be described below with reference to the Figures.

Mobile wallets and digital wallet passes will first be discussed below. Embodiments of the disclosure will then be described, exploring different approaches to providing payment links on a digital wallet pass using different payment modalities. The embodiments described below therefore relate to different implementations of the integrated payment feature of the present disclosure, when using different payment methods within a digital wallet pass.

Mobile wallets (i.e., digital wallets or e-wallets), are digital applications that enable users to store and manage various types of credentials, originally payment credentials, in the form of digital wallet passes, such as credit card information, debit card details, bank account information, and digital currencies, on their mobile devices. The base function of such a mobile payment is to support digital transactions, typically conducted using a digital version of an existing consumer credit or debit card. These wallets securely store payment information, allowing users to make electronic transactions conveniently and securely. Mobile wallets serve as a digital counterpart to physical wallets, eliminating the need to carry multiple cards or cash. They provide a convenient and streamlined way to make payments, both online and in physical retail environments, by leveraging the capabilities of smartphones, tablets, or other mobile devices. Some of the primary functions of mobile wallets include:
- Payment Processing: Mobile wallets allow users to make payments for goods and services using their stored payment credentials. They facilitate secure and seamless transactions by securely transmitting payment information to merchants or payment processors.
- Contactless Payments: Many mobile wallets support Near Field Communication (NFC) technology, enabling users to make contactless payments by simply tapping their mobile device against a compatible payment terminal. This feature is commonly used for in-store purchases at retail locations.
- Online Shopping: Mobile wallets simplify the checkout process for online purchases. Users can select their stored payment credentials during the payment stage, eliminating the need to manually enter card details for each transaction. This expedites the checkout process and enhances user convenience.
- Peer-to-Peer (P2P) Payments: Some mobile wallets offer P2P payment functionalities, allowing users to send or receive money from friends, family, or acquaintances. These wallets facilitate money transfers directly between individuals, often through linked bank accounts or other payment methods.
- Security and Authentication: Mobile wallets incorporate security features to protect user payment information. These may include biometric authentication methods like fingerprint recognition or facial recognition, as well as encryption techniques to safeguard sensitive data.

Examples of popular mobile wallets include, but are not limited to: Apple Wallet, Google Wallet, Samsung Wallet, PayPal Digital Wallet, and various bank-specific wallets. Specific wallets may be associated with specific payment solutions (e.g. Apple Pay for Apple Wallet, Google Pay for Google Wallet, and Samsung Pay for Samsung Wallet). The availability and features of mobile wallets can vary depending on the mobile operating system, on the region, and on the individual wallet providers.

In addition to these transaction related credentials, a mobile wallet is typically adapted to hold other types of credentials. These are typically digital versions of loyalty cards, membership cards, event tickets, boarding passes, and other forms of digital passes. This consolidates the storage of these cards and tickets within a single app, providing easy access and eliminating the need to carry physical copies. Such digital wallet passes (i.e., mobile wallet passes) implemented within the digital wallets, are digital representations of physical cards, tickets, coupons, or other forms of passes that are stored and accessed within a mobile wallet application on a smartphone or other mobile devices. Such digital wallet passes will have a format defined by their digital wallet application. These passes leverage the capabilities of mobile wallets to provide a convenient and digital alternative to traditional physical passes. Digital wallet passes can offer a range of functionalities depending on their specific type and purpose. Some examples of known functionalities provided by wallet passes include:
- Membership cards for loyalty programs, rewards programs, or other membership-based services. Users can access and present these passes digitally, allowing for easy retrieval and use at the point of sale.
- Event Tickets and Boarding Passes: Digital wallet passes can store electronic event tickets for concerts, movies, sports events, or boarding passes for flights. Users can display these passes on their mobile devices for ticket validation or boarding purposes, eliminating the need for physical tickets.
- Coupons and Discounts: Digital wallet passes can store coupons, discounts, or promotional offers from retailers or service providers. Users can redeem these passes by presenting them at the time of purchase, allowing for convenient and paperless discounts.
- Store Cards and Gift Cards: Digital wallet passes can store store-specific cards or gift cards, enabling users to access and use them for purchases at participating retailers. This eliminates the need to carry physical cards or remember specific card details.
- Transit and Access Cards: Digital wallet passes can support transit systems or access control systems, allowing users to store and use electronic tickets or access cards for public transportation, parking, or building entry. This streamlines the process of accessing services or facilities.
- Dynamic Updates and Notifications: Digital wallet passes can receive updates or push notifications that provide real-time information or changes related to the pass. This can include updates on flight delays, changes in event schedules, or expiration reminders for coupons or loyalty points.
- Geo-location and Proximity-based Features: Digital wallet passes can leverage location services to provide relevant information or notifications based on the user's location. For example, a pass for a retail store may trigger a notification when the user is near the store, informing them of ongoing promotions or deals.

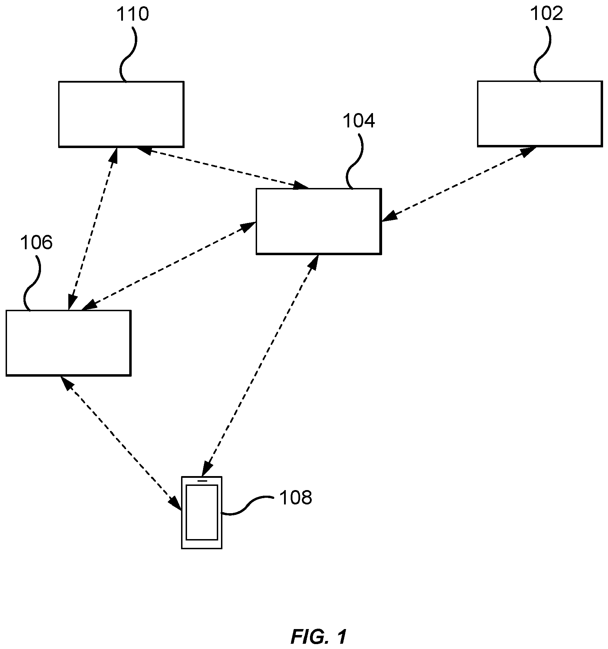

Figure 1 shows an implementation of a transaction system according to an embodiment of the disclosure, where the merchant is the digital pass creator. As shown in Figure 1, a merchant server 104 communicates with a wallet server 106, and is able to push newly created digital passes as well as any updates, such as payment links. The wallet server 106 is connected to a user device 108 and mediates the communication with the merchant server 104, in addition to storing user information that is used in the payment transactions. The merchant server 104 is also connected to a payment gateway 102, to process the in-app transactions. The system also comprises a mobile payment application server 110 that is connected to the merchant server 104 and to the wallet server 106, which stores the merchant's identification information to ensure the security and legitimacy of the transaction.

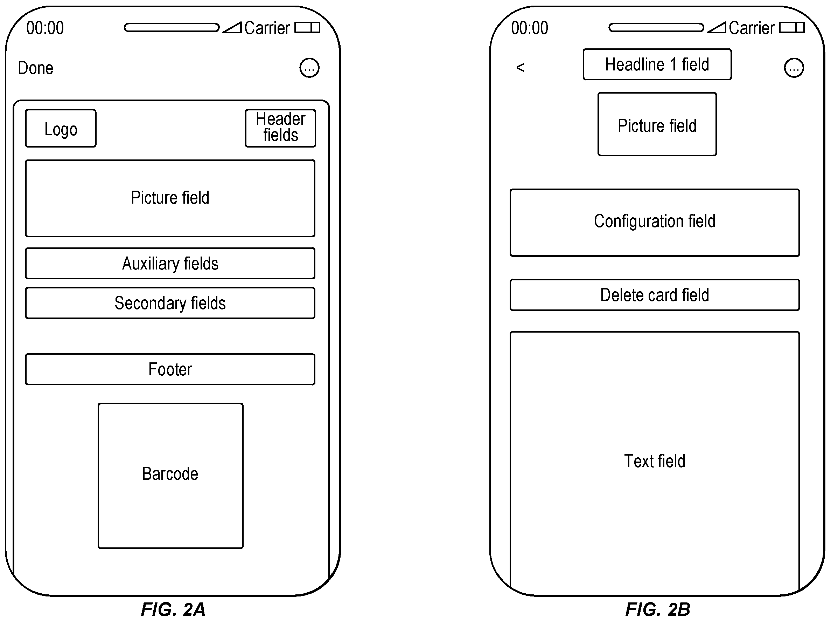

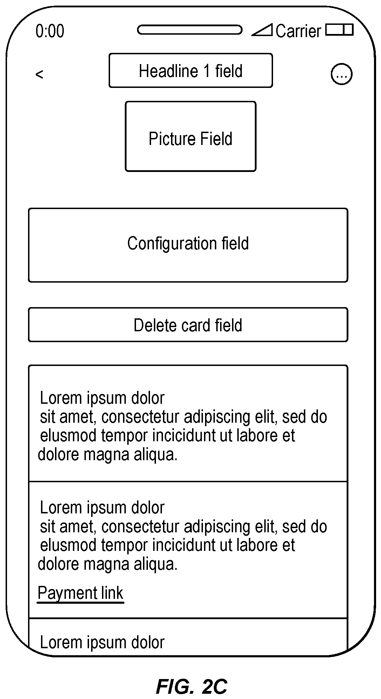

A typical digital wallet pass or digital pass, has a face side (Figure 2A) and a rear side (Figure 2B and Figure 2C). The face side of a digital wallet pass typically represents the visible or user-facing side of the pass within a mobile wallet app, and provides essential information and functionality for the passholder, such as, but not limited to: description of the purpose of the pass, personal information for the pass holder; a scannable barcode or QR code containing encoded information that can be scanned by a compatible barcode reader or scanner; pass status and expiration date.

The rear side of the digital pass may provide additional information and functionalities that complement the frontside. Typically, the additional information includes terms and conditions associated with the pass; customer services contacts; personalisation functionalities, and additional details regarding supplementary information about the pass, such as product descriptions, benefits, restrictions, or any relevant instructions that cannot be accommodated on the frontside.

In embodiments of the disclosure, a digital wallet pass also includes a payment link. In the embodiments shown, these links are located on the rear side of a digital wallet pass in a region without another defined purpose. In a basic version, such functionality could allow a jump to the web browser or to a mobile application (app), for in-app payment, as shown in Figure 2C. Such functionality is used in embodiments described below to go further than simply moving the customer to a place where they can make payment - they can in embodiments be used to dynamically generate and personalize payment links to enable processing of an Open Banking, PayByLink or a mobile based payment transaction, directly from the digital wallet pass.

In the context of the present disclosure, in-app payment refers to the capability of making payments directly within a mobile application without the need to redirect to external websites or payment platforms. In-app payments are widely used to enable users to complete transactions, purchase goods or services, or make in-app subscriptions seamlessly and securely within an app environment.

For an in-app payment, there is usually a set-up stage in which users store their payment information, such as credit card details or digital wallets, securely within the app. This eliminates the need to manually enter payment information for each transaction, providing a more convenient and efficient payment experience. The in-app payment feature typically involves integration with various payment gateways or payment service providers, which handle the processing and secure transmission of payment data. This integration ensures that sensitive payment information is encrypted and protected during the transaction process.

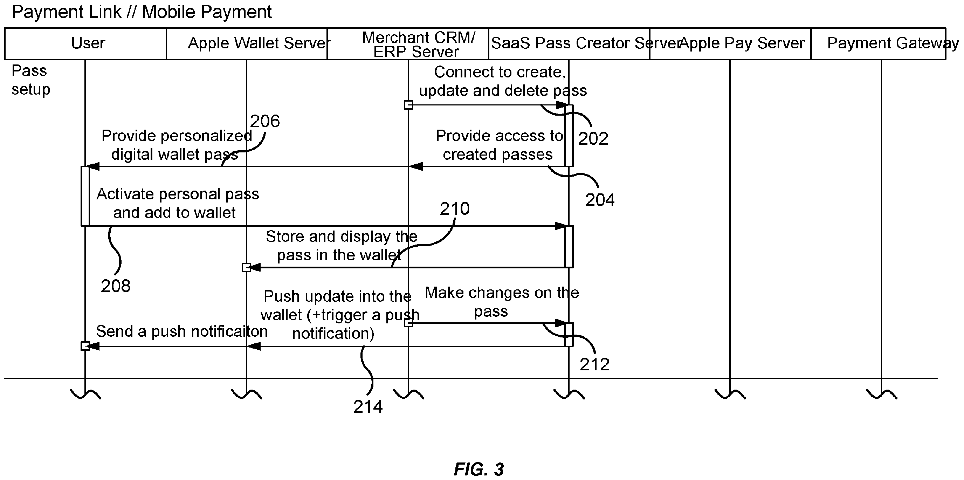

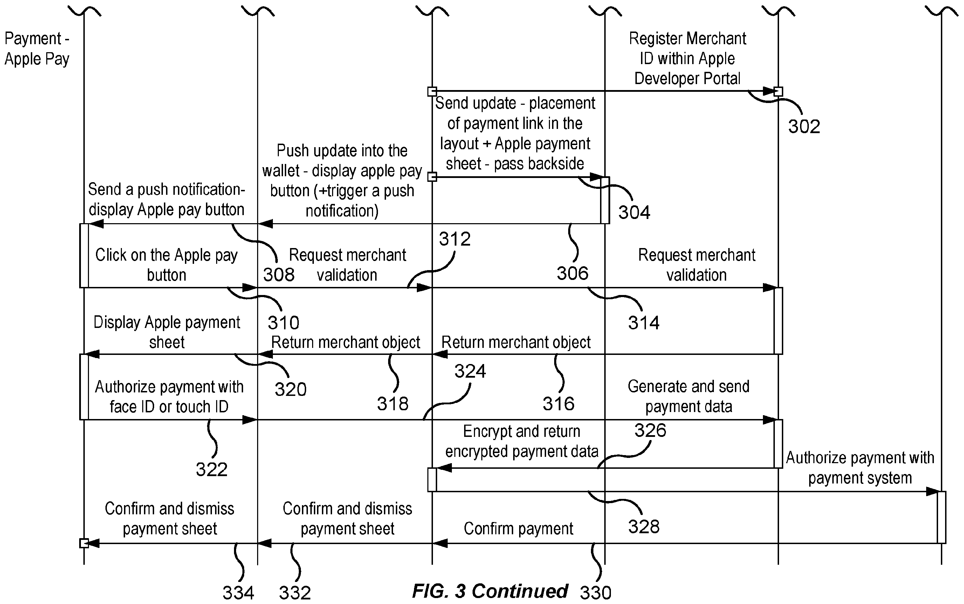

A flow diagram with exemplary steps for setting-up, updating or deleting a digital wallet pass that may be used to implement the payment method described in the present disclosure is presented in Figure 3.

At a first step 202, a merchant server connects to a pass creation server associated with a Software as a Service (SaaS) provider, to obtain a digital pass for a service - this may be an existing type of digital pass (such as a boarding pass or a mobile ticket) obtained in a conventional manner. In other embodiments, the merchant server or merchant system may itself be programmed to independently develop and provide digital passes, which are sent directly by the merchant server to the mobile wallet server ( e.g., Apple Wallet, Google Wallet, Samsung Wallet), via a direct communication between the merchant server and the mobile wallet server. At step 204 the pass creation server provides access to the merchant server to the digital wallet passes that have been created and at step 206, the merchant server provides a digital pass to a user device wallet personalised to the user of that wallet. At step 208, the user at the user device activates the personal pass and adds the pass to their digital wallet, and that information is transmitted to the pass provider (which in different embodiments may be the pass creation server or the merchant server). The pass creation server then, at step 210, sends a notification to a wallet server (e.g., Apple Wallet or Google Wallet). Once the digital pass is created and the merchant wants to make changes to the existing pass such as, for example, to add a payment link at the backside of the digital wallet pass, the merchant server sends a notification with the update to the pass creation server (step 212), and the pass creation server pushes the update into the wallet server, which triggers a push notification with the update to the user device (step 214), updating the digital pass within the user's digital wallet. In embodiments where the merchant server developed the digital pass, the merchant server may send notifications with updates to the pass directly to the mobile wallet server.

Once the wallet pass is created, there are different methods for implementing payment links and performing payments through the existing digital wallet pass, using, for example, a web-link to the merchant checkout webpage having different payment method options, a mobile payment link to a mobile payment transaction application (e.g., Apple Pay, Google Pay), by Open Banking using a credit card payment via a secure link, such as for example Pay By Link (e.g., Single Area Payment Area (SEPA) transfers), or a deep-link to a checkout page within a merchant mobile application. Different embodiments of the disclosure are described below using payment links together with different payment methods. We will start by describing the implementation of payment links with a mobile payment transaction application.

A method for carrying out a wireless transaction from a digital pass using Apple Pay as an example of a mobile payment transaction application, according to an embodiment of the disclosure, is shown in the continuation of the flow diagram of Figure 3. Such mobile payment applications are typically closely associated with a digital wallet, and may be provided in connection with a digital wallet native to a particular mobile device and associated with its operating system. Apple Pay and Google Pay are very widely used examples of such mobile payment applications, and implementation for Apple Pay and Google Pay is described here, though it should be understood that any suitable mobile payment application may be used to implement the method described herein.

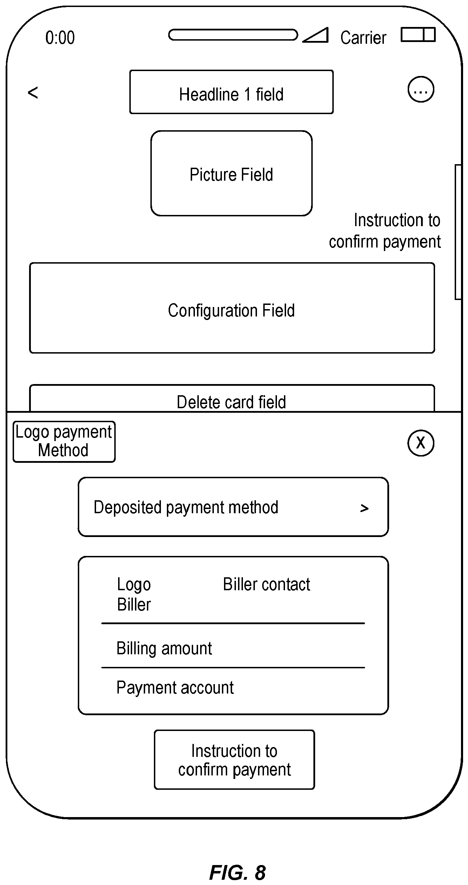

Once the digital wallet pass is created and is available at the user device, a merchant server sends a notification to the server associated with the mobile payment application server (here this is an Apple Pay server - for mobile payment applications associated with a card issuer this may be a server associated with a payment infrastructure), to create a payment request. This is done using the appropriate Application Programming Interface (API) and tools provided in connection with the mobile payment application (Apple for Apple Pay, Google for Google Pay, etc.). This involves structuring the request with the necessary data fields, such as the payment amount, currency, merchant identifier, and any other relevant information specific to the transaction (Step 302). The payment request is encrypted and signed using cryptographic techniques to ensure the security and integrity of the data. This process involves using known encryption mechanisms and certificates to protect sensitive payment information. The encrypted and signed payment request is then used to generate a payment link (e.g., Apple Pay link). This link is a unique URL that contains the necessary data to process the payment. It can be generated by the merchant's backend system or through developer tools associated with the mobile payment application. At step 304 a notification is sent by the merchant server to the pass creation server with a request to update the digital pass with the payment link. The pass creation server then pushes the update to the mobile wallet server (step 306). Alternatively, in embodiments where the merchant server created and provided the digital pass, the merchant server may push the update to the mobile wallet server via a direct communication between the merchant server and the mobile wallet provider. The mobile wallet application then sends a push notification to the user device to display an in-app payment button associated with the payment link generated (step 308) - at this point, the digital pass is provided to the user with the Apple Pay payment link. (In principle, once the Apple Pay link is generated, it could be shared with the user through various channels, such as email, SMS, or within an app). When presented with the link, the user can open it on their mobile device. Once the user interacts with the payment link (by for example clicking on it), the mobile payment application can initiate a transaction based on the information provided by the merchant associated with the payment link. At step 310, once the user interacts with the payment link, the user device sends a notification to the mobile wallet server, which then sends a validation request to the merchant server (step 312) which allows the merchant server to establish the transaction. The merchant server determines that the transaction is valid, and then sends a notification to the server associated with the mobile payment application to ask for validation that a payment request can be established for the transaction established by that merchant (step 314). At step 316, in the case of Apple Pay, the server returns a merchant object to the merchant server to establish the Apple Pay transaction, and the merchant server then sends the merchant object to the mobile wallet server (step 318), which then sends an Apple Pay payment sheet to the user device (step 320). The payment sheet contains the payment details associated with the transaction, provided directly or indirectly through the original payment link, and may offer further choices relating to the transaction to the user. At this point, the process is as for a conventional Apple Pay transaction. At step 322, the user is prompted to authenticate themselves using an available method, such as, but not limited to; Touch ID, Face ID, or their device passcode. This step ensures the security of the payment authorization process. On authentication of the user to authorize the payment, the mobile payment application provides transaction details to enable transaction authorization in a payment data token, which is routed (step 324) to the Apple Pay server. At step 326, the Apple Pay server encrypts the payment data token, which is sent to the merchant server. The merchant server receives the encrypted payment data token and sends it a payment gateway for payment authorisation by or on behalf of a card issuer (step 328) through a payment infrastructure in a conventional manner, such as through a payment gateway. On authorisation of the transaction, the payment gateway sends a confirmation of payment to the merchant server (step 330), which then sends the confirmation to the mobile wallet server (step 332). Figure 8 shows an illustrative example of the user interface as seen by the user when prompt to confirm payment. As shown in Figure 8, the confirmation request may show additional information related to the transaction, such as payee and payer information, and it may prompt the user to select the payment method, when applicable.

As a last step 334, the mobile wallet server sends a payment confirmation (e.g., a receipt or an order confirmation number) to the user device and dismisses the payment sheet. As such, once the user authorizes the payment, the payment is processed securely using the user's stored payment method, such as a credit or debit card. The payment is typically processed in real-time, and the user receives a confirmation of the completed transaction.

The implementation of a mobile payment application for in-app payment within a user device will be described below, having as basis the exemplary implementation using Apple Pay or Google Pay, though other known mobile payment applications will use similar implementations.

A first step for implementing the process of the in-app method is obtaining a Developer Account (e.g., Google developer account or Apple developer account), which will provide access to the necessary tools, documentation, and resources for implementing Apple Pay (or Google Pay). Once this has been done, a further step is integrating the Apple Pay (or Google Pay) software developer kit into the merchant's mobile app, which provide the necessary Application Programming Interfaces (APIs) and libraries to communicate with the Apple Pay (or Google Pay) system. A further step is to set up the merchant identity within the Apple Pay (or Google Pay) to establish the association between the merchant's app and the merchant's payment processing backend. After that, the payment processing backend can be configured, in order to handle the communication between the merchant's app, the payment network, and the merchant's payment processor or gateway. This step implements the necessary server-side logic to securely process payment requests and handle the transaction lifecycle. A further step is then to create a payment authorization request within the app. As such, a user can be presented with the option to pay with Apple Pay (or Google Pay) at the appropriate stage of the checkout process, during a transaction. The request can include information on the payment amount, on supported payment networks, on shipping information, and on any other relevant details. Through this process, once the user selects Apple Pay (or Google Pay) and authorizes the payment, the merchant's app will receive a payment authorization response. Therefore, a further step is to implement the necessary code to handle the authorisation response, which includes verifying the authorization, extracting payment details, and confirming the payment with the merchant's backend. To ensure that all payment data transmitted between the merchant's app and the merchant's backend is encrypted and transmitted securely, a further step is to use data encrypting methods, such as industry-standard security protocols. Once the payment authorization is confirmed, a further step of the implementation is for the Merchant to communicate with their payment processing backend to complete the transaction. This involves submitting the payment details, processing the payment with the chosen payment network or processor, and handling any post-transaction actions, such as generating receipts or updating order status. Final implementation steps include handling network errors, authentication failures, payment method availability, and fallback options in case Apple Pay (or Google Pay) is not available or the transaction fails.

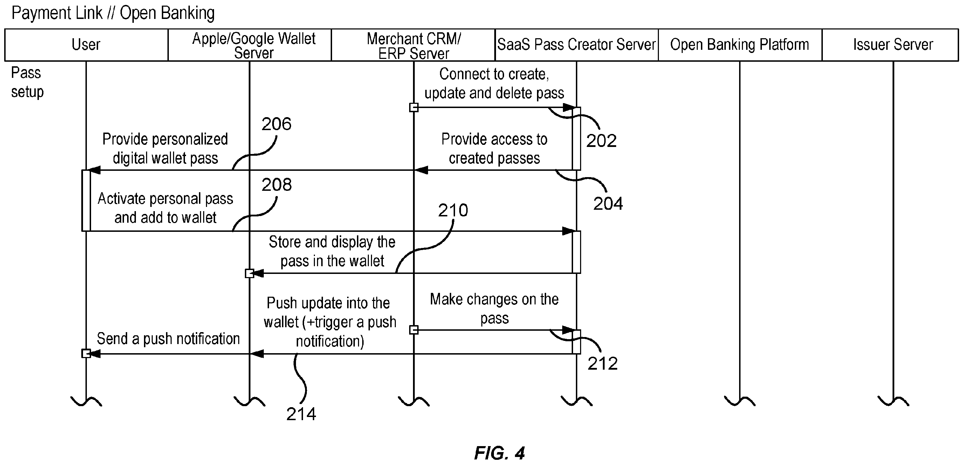

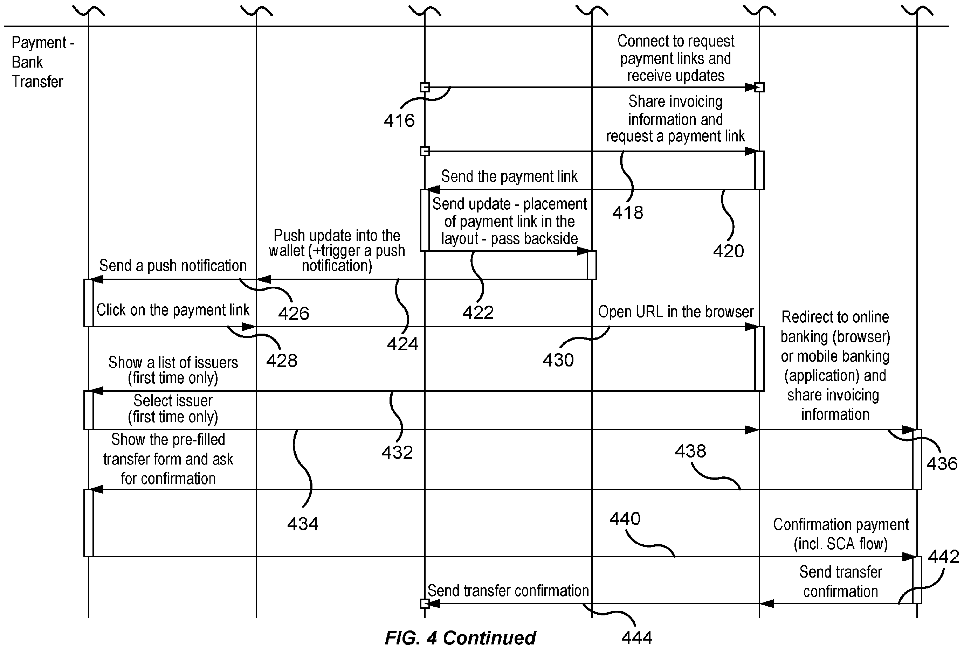

A method for carrying out a wireless transaction from a digital pass using an Open Banking payment link, according to an embodiment of the disclosure, is shown in the flow diagram of Figure 4 that follows the flow diagram for setting up a digital pass, as described above in relation to Figure 3. The term Open Banking as used herein refers to a system that allows customers to grant authorized third-party financial service providers access to their banking and financial data. It is an initiative aimed at increasing competition, innovation, and customer control in the financial industry by enabling the secure sharing of financial information between different institutions. In Open Banking, customers have the power to share their financial data, such as transaction history, account details, and payment information, with other regulated financial institutions or authorized third-party providers (TPPs). This data sharing is facilitated through standardized application programming interfaces (APIs) that enable secure communication and data exchange between the customer's bank and the authorized TPPs. Some Open Banking systems support a system termed Pay by Link. Using this approach, a request can be generated from the basic elements of a transaction - the currency, the amount and a unique identified - and these can be shared from merchant to customer using some form of secure link, such as a QR code, which is then scanned by the customer to initiate the payment. The approach described below uses a payment link of this type.

At a first step 416, the merchant connects to an open banking platform to request a payment link and to receive updates regarding the transaction. At step 418, the merchant shares invoicing information regarding the transaction and request a payment link. At step 420, the open banking platform generates a unique payment link specific to the customer and transaction and sends the information to the merchant server. The open banking platform or service provider may generate a unique payment link specific to the customer and transaction through their backend system or payment gateway. The merchant server then sends a request to the pass creation server to update the existing digital wallet pass (step 422). Alternatively, in embodiments where the merchant server developed and provided the digital pass, the step of updating the existing digital wallet pass is performed by the merchant server. At step 424 the pass creation server sends a push update with the payment link into the wallet server, which triggers a push notification from the wallet server to the user device (step 426). In embodiments where the merchant server developed and provided the digital pass, the merchant server sends a update with the payment link into the wallet server via a direct communication between the merchant server and the mobile wallet server. Note that while the creation of the digital pass and its updating with a payment link are separated in time here, other arrangements are possible, such as the creation of the payment link before or at the time of creation of the digital pass, so that the digital pass contains the payment link from its creation. Once the link is present on the digital pass, the user may interact with the payment link by clicking on the link within the digital pass on the user device (step 428), which sends a notification to the wallet server. The wallet server, at step 430, sends a notification to the open banking platform that the user interacted with the payment link, which opens a URL in the user device's browser. At the user's first access to a payment link generated within the digital pass, the user is presented with a list of issuers for selection (step 432), and the user then selects a specific issuer that will be used in the transaction. This information is sent to the open banking server (step 434), which then redirects the user to an online banking website, when the payment is performed on a browser, or to a mobile banking application, when the payment is performed on a mobile application (step 436). Alternatively, when the payment is performed on a browser, the system may check whether a mobile banking application is installed on the mobile device, and may offer the user to continue the process in the installed mobile banking application. The selected issuer server then prompts the user to enter login information or a pin, by displaying a login page. The login information may alternatively be provided by the user using face recognition or touch ID. Once the user has logged into the issuer environment, either in a web browser or in an app environment, the issuer server sends a notification to the user device, which presents to the user a pre-filled transfer form, and a request for confirmation to perform the transaction (step 438). As such, the user or customer interaction with the payment link may direct them to a secure payment page or portal. The secure payment page typically contains details of the transaction, including the payment amount, reference information, and options for payment methods. At step 440, the user confirms the transaction which sends a confirmation for payment to the issuer server. To proceed with the payment, the customer is typically required to authenticate themselves using their online banking credentials or other authentication methods provided by their bank. This ensures the security and validity of the payment transaction.

Once the customer has successfully authenticated and authorized the payment, the payment is processed securely through the open banking infrastructure. The necessary funds are transferred from the user's bank account to the merchant's account in real-time or within a specified time frame. This includes a transfer confirmation being sent from the issuer server to the open banking platform (step 442), followed by a confirmation from the open banking platform to the merchant server (step 444). After the payment is processed, the customer receives a confirmation message or notification indicating the successful completion of the payment transaction. This may include a receipt, transaction reference, or other relevant information.

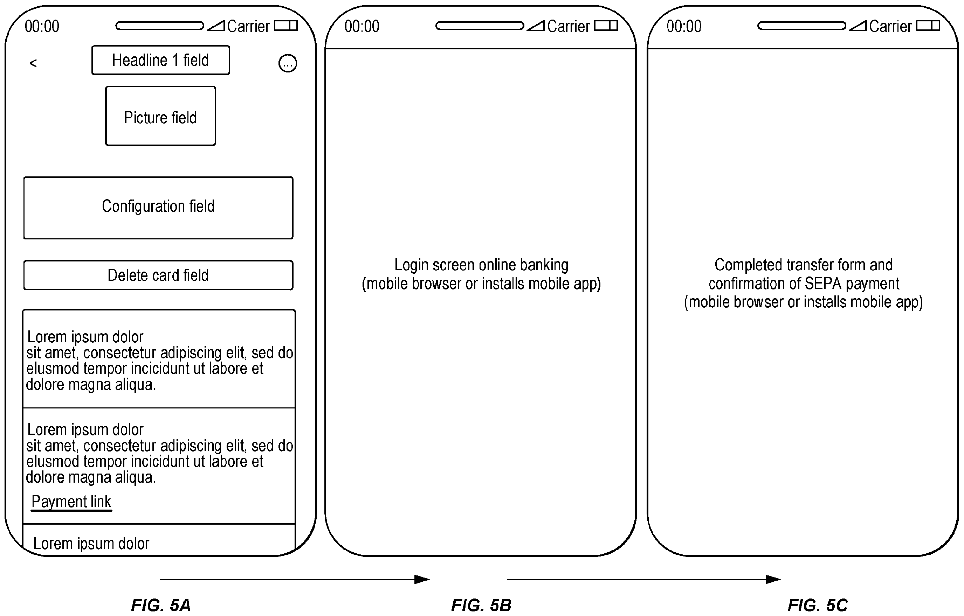

Figures 5A to 5C illustrate the screens shown to a user throughout the process of performing a payment with a payment link connected to an Open Banking Platform, according to embodiments of the present disclosure. Figure 5A shows the backside of a digital wallet pass with a payment link. Figure 5B illustrates the login screen opened within the mobile browser or within the mobile app, as described in steps 430 to 434 above. Figure 5C is an illustrative example of the screen shown to the user at the user device with the pre-filled form having the transaction details and a confirmation of payment once the transaction is completed, as described in steps 436 to 440 above.

The term Pay By Link as used herein refers to the use of a payment method utilising Open Banking protocols. It enables businesses or individuals to initiate and receive payments by generating dynamic payment links that customers can use to make payments directly from their bank accounts. Some of the advantages of using Pay By Link payments within a digital wallet pass relate to the convenience provided to the user, since it allows users to make payments directly from their bank accounts without the need to enter card details or other payment information repeatedly. In addition, Pay By Link payments leverages the security measures and authentication protocols of the Open Banking framework, ensuring a secure transaction environment for both users and merchants. Additional benefits of this method relate to faster settlements, since payments made through Pay By Link often settle faster than traditional methods, as the funds are transferred directly from the customer's bank account to the Merchant's account.

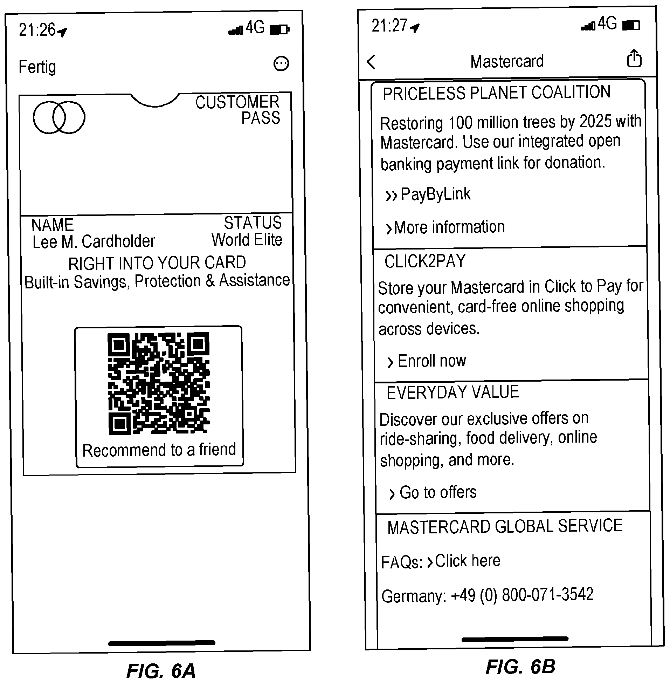

Figure 6A and Figure 6B show the front and rear sides, respectively, of an exemplary structure of a digital pass, according to an embodiment of the disclosure. In Figure 6B, the rear side of the digital pass includes a payment link that is embedded in complementary information provided by the merchant. In this case the payment link is for a Pay By Link method, using Open Banking, though as described herein, other payment methods may be implemented.

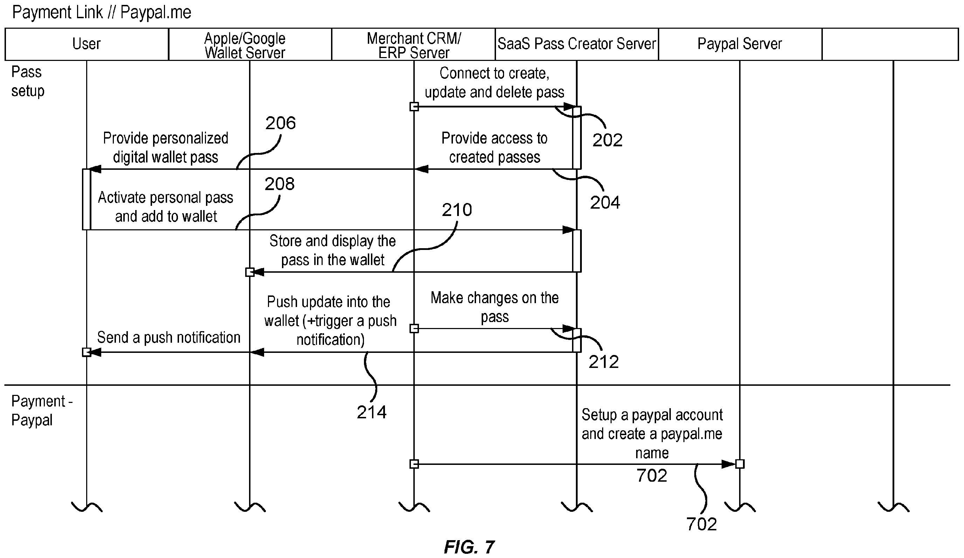

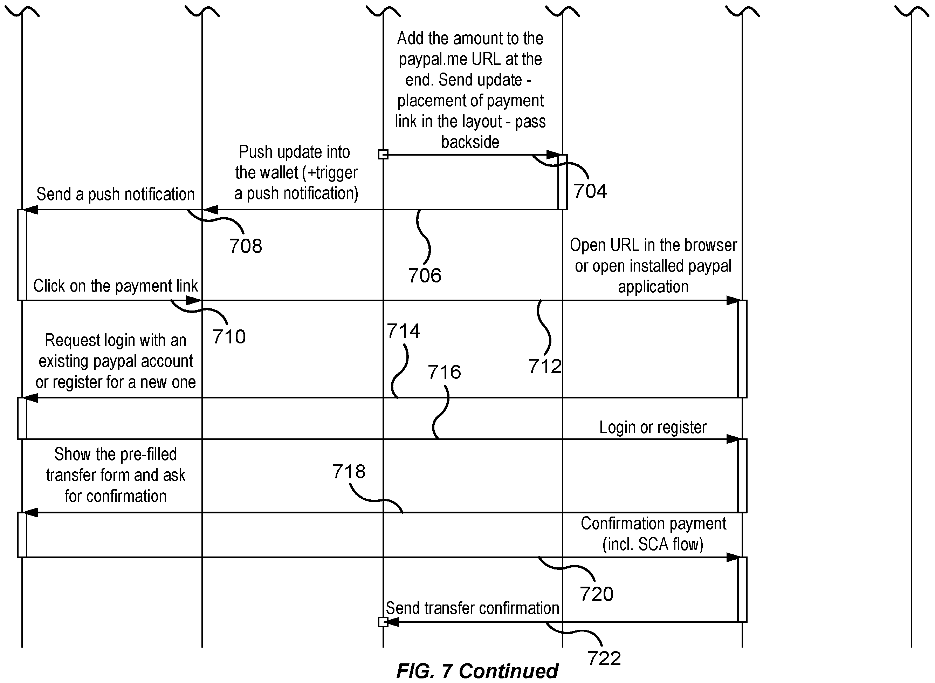

Figure 7 shows a method for carrying out a wireless transaction from a digital pass using a payment link from an online payment platform - these can be used in a similar manner to Pay By Link to provide what is effectively peer-to-peer payment. The flow diagram presented in Figure 7, and described below, uses paypal as an example of an online payment platform, implemented with the present disclosure, using the paypal.me for provision of a payment link. However, it should be understood that a functionally similar process to that described herein can be used with other online payment platforms, such as, but not limited to Stripe, GoCardless, and WorldPay.

As shown in Figure 7, the steps described above for setting up the digital wallet pass are also used for setting up the digital wallet pass that implements payment through a payment link of an online payment platform. Once the digital wallet pass is created, in step 702 the merchant server sets up an account at the online payment platform server (e.g., paypal account) - this may of course be a pre-existing account in which case this step does not need to be performed at this point. At step 704, the merchant server sends a notification to the digital pass creation server for updating the digital wallet pass with a payment link, where the notification includes payment details within the payment link - for this specific implementation, the payment link is a paypal.me payment link, which provides information to support a payor-to-payee transfer broadly similar to Pay By Link as described above. Alternatively, in embodiments where the merchant server developed and provided the digital pass, the step of updating the digital wallet pass with a payment link is performed at the merchant server. At step 706, the digital wallet pass creation server pushes the update containing the payment link to the wallet server (e.g., Apple Wallet or Google Wallet, for example). In embodiments where the merchant server developed and provided the digital pass, the merchant server directly pushes the update containing the payment link to the wallet server. The wallet server then sends a push notification to the user device with the payment link (step 708). Once the user receives the payment link at their device, the user may interact with the payment link, by clicking on the payment link, which sends a notification to the wallet server (step 710). At step 712, once the wallet server receives the notification, it then sends the notification to the online payment platform and opens an URL in the browser or opens an installed application for the online payment platform. At step 714, the online payment platform sends a login request to the user device, when the user already has an account. Alternatively, when the user does not have an account at the online payment provider, the online payment provider server may send a registration request to the user device. At step 716, the user provides login details to their online payment platform account or sends the details to register as a new user. At step 718, the online payment platform server, after receiving the user's login details, sends a notification to the user device, having a pre-filled transfer form with pre-populated payment details based on the data included in the link. At step 720 the user device sends a notification to the online payment platform server, confirming the payment. The payment platform server then performs the transaction of funds from the user account to the merchant account, and sends a confirmation of the transaction to the merchant server (step 722).

As the person skilled in the art will appreciate, modifications and variations to the above embodiments may be provided, and further embodiments may be developed, without departing from the scope of the disclosure. Reference to standards and proprietary technologies are provided for the purpose of describing effective implementations, and do not limit the scope of the disclosure.

## Claims

1. Method for staging a wireless transaction from a digital pass, the method comprising at a merchant server:
identifying a potential transaction, and determining transaction information for the payment transaction;
obtaining a payment link, wherein the payment link provides access to the transaction information to allow the potential transaction to be initiated at a user device;
providing the payment link for incorporation into a digital pass for provision to a digital wallet of the user device.

2. The method for staging a wireless transaction from a digital pass of claim 1,
wherein access to the digital pass is obtained from a digital pass creation server.

3. The method for staging a wireless transaction from a digital pass of claim 1,
wherein the digital pass is created at the merchant server.

4. The method for staging a wireless transaction from a digital pass of any preceding claim, wherein the digital pass is created without a payment link, and wherein the merchant server instructs an update to the digital pass to incorporate the payment link into the digital pass.

5. The method for staging a wireless transaction from a digital pass of any preceding claim, wherein the digital pass is associated with an app installed at the user device, and wherein the payment link is associated with an in-app transaction.

6. The method for staging a wireless transaction from a digital pass of any preceding claim, wherein the payment link is for payment using a mobile wallet application.

7. The method for staging a wireless transaction from a digital pass of claims 1 to 5, wherein the payment link is for payment using an open banking platform.

8. The method for staging a wireless transaction from a digital pass of claims 1 to 5, wherein the payment link is for payment using an online payment platform.

9. A method for carrying out a wireless transaction from a digital pass, the method comprising at a user device:
receiving a digital pass in a digital wallet of the user device, wherein the digital pass comprises a payment link for a potential transaction associated with the digital pass, and wherein the potential transaction has predetermined transaction details;
receiving a user activation of the payment link, and initiating the potential transaction according to the predetermined transaction details.

10. The method for carrying out a wireless transaction from a digital pass of claim 9, wherein the user device receives an authorisation request before the transaction is completed.

11. The method for carrying out a wireless transaction from a digital pass of claims 9 or 10, wherein initiating the potential transaction comprises the user interacting with the payment link.

12. The method for carrying out a wireless transaction from a digital pass of claim 11, wherein a merchant validation request is sent to a merchant server after the user interacted with the payment link and before initiating the transaction.

13. The method for staging a wireless transaction from a digital pass of any of claims 9 to 12, wherein the payment link is for payment using a mobile wallet application.

14. The method for staging a wireless transaction from a digital pass of any of claims 9 to 12, wherein the payment link is for payment using an open banking platform.

15. The method for staging a wireless transaction from a digital pass of any of claims 9 to 12, wherein the payment link is for payment using an online payment platform.
